(19) Europäisches Patentamt
European Patent Office
Office européen des brevets

(11) **EP 1 519 785 B1**

(12) **FASCICULE DE BREVET EUROPEEN**

(45) Date de publication et mention
de la délivrance du brevet:
**14.05.2008 Bulletin 2008/20**

(51) Int Cl.:
***B01J 23/30*** *(2006.01)*    ***B01J 21/06*** *(2006.01)*
***B01J 35/00*** *(2006.01)*    ***B01J 37/02*** *(2006.01)*

(21) Numéro de dépôt: **03762721.3**

(22) Date de dépôt: **01.07.2003**

(86) Numéro de dépôt international:
**PCT/FR2003/002040**

(87) Numéro de publication internationale:
**WO 2004/004893 (15.01.2004 Gazette 2004/03)**

(54) **CATALYSEURS COMPRENANT UNE MONOCOUCHE D'OXYDE DE TUNGSTENE SUR UN SUPPORT ZIRCONE ET/OU OXYDE DE TITANE**

KATALYSATOR BESTEHEND AUS EINER WOLFRAMOXIDMONOSCHICHT AUF EINEM ZIRKON-UND/ODER TITANDIOXIDTRÄGER

CATALYSTS COMPRISING A TUNGSTEN OXIDE MONOLAYER ONTO A ZIRCONIA AND/OR TITANIA CARRIER

(84) Etats contractants désignés:
**AT BE BG CH CY CZ DE DK EE ES FI FR GB GR HU IE IT LI LU MC NL PT RO SE SI SK TR**

(30) Priorité: **03.07.2002 FR 0208318**

(43) Date de publication de la demande:
**06.04.2005 Bulletin 2005/14**

(73) Titulaire: **CENTRE NATIONAL DE LA RECHERCHE SCIENTIFIQUE (CNRS)**
**75016 Paris (FR)**

(72) Inventeurs:
• **FIGUERAS, François**
**69003 Lyon (FR)**
• **ESSAYEM, Nadine**
**38540 Saint Just Chaleyssin (FR)**
• **FECHE, Cyril**
**69100 Villeurbanne (FR)**
• **LORIDANT, Stéfane**
**69330 Meyzieu (FR)**
• **PALOMEQUE, Jorge**
**54160 Tlanep (MX)**
• **GELBARD, Georges**
**69300 Caluire (FR)**

(74) Mandataire: **Colombet, Alain André et al**
**Cabinet Lavoix,**
**2, Place d'Estienne d'Orves**
**75441 Paris Cedex 09 (FR)**

(56) Documents cités:
EP-A- 0 547 934    WO-A-01/48119
GB-A- 1 249 079    US-A- 2 739 132
US-A- 3 474 042    US-A- 5 543 036

• PARERA J M ET AL: "n-butane isomerization on tungsten oxide supported on zirconia" APPLIED CATALYSIS A: GENERAL, ELSEVIER SCIENCE, AMSTERDAM, NL, vol. 163, no. 1-2, 5 décembre 1997 (1997-12-05), pages 165-175, XP004338258 ISSN: 0926-860X
• JONG RACK SOHN ET AL.: "Characterization of zirconia-supported tungsten oxide catalyst" LANGMUIR, vol. 14, no. 21, 1998, pages 6140-6145, XP002234339
• M.A. VUURMAN ET I.E. WACHS: "Structural determination of supported V2O5-WO3/TiO2 catalysts by in situ Raman spectrometry and X-ray photoelectron spectroscopy" JOURNAL OF PHYSICAL CHEMISTRY, vol. 95, no. 24, 1991, pages 9928-9937, XP002234340
• SCHEITHAUER M. ET AL: 'Genesis and structure of WOxZrO2 solid acid catalysts' LANGMUIR vol. 14, 1998, NEW-YORK, pages 3019 - 3029, XP002374865
• FIGUERAS F. ET AL: 'Influence of the coordination on the catalytic properties of supported W catalysts' JOURNAL OF CATALYSYS vol. 226, 2004, pages 25 - 31, XP004518081

- **VAUDAGNA S.R. ET AL: 'Platinum supported WOx-ZrO2: Effect of calcination temperature and tungsten loading' APPLIED CATALYSIS A: GENERAL vol. 168, 1998, AMSTERDAM, NL, pages 93 - 111, XP004271340**

Remarques:
Le dossier contient des informations techniques présentées postérieurement au dépôt de la demande et ne figurant pas dans le présent fascicule.

**EP 1 519 785 B1**

**Description**

La présente invention concerne un nouveau catalyseur à base de tungstène sur support zircone et/ou dioxyde de titane, son procédé de préparation et ses utilisations en tant que catalyseur de réactions chimiques, notamment dans le domaine pétrochimique, en particulier le raffinage.

L'oxyde de zirconium ou zircone ($ZrO_2$) est un solide largement utilisé dans la catalyse. Parmi les propriétés physiques qui le rendent tout à fait adapté pour cet usage, on peut citer son point de fusion élevé (3003 K), sa conductivité thermique basse et sa haute résistance à la corrosion par des acides.

Du point de vue des propriétés chimiques, c'est un support amphotère, comme l'alumine, qui peut être utilisé dans des réactions d'oxydation et de réduction. La cristallisation et le frittage des cristallites par calcination ne sont pas désirés pour l'utilisation comme support.

Il est connu que la zircone développe des propriétés acides par sulfatation et est active pour l'isomérisation de paraffines. La surface spécifique améliore l'activité catalytique. Cette surface peut être augmentée par le pH de précipitation. Diverses phases cristallographiques sont observées lors de la calcination de la zircone : tétragonale et monoclinique.

La zircone peut être synthétisée par diverses méthodes comme la précipitation en solution aqueuse de sels de zirconium comme $ZrOCl_2 \cdot 8H_2O$, $ZrO(NO_3)_2 \cdot 2H_2O$, $ZrCl_4$ ou la méthode sol-gel.

Les catalyseurs de tungstène/zircone ($W-ZrO_2$) sont connus depuis longtemps et sont une alternative pour les réactions catalysées par des sites acides. L'avantage de ces solides sur les sulfates est qu'ils ne perdent pas le dopant lors du traitement thermique et ils se désactivent moins. Ils ont été décrits par Hino et Arata (J. Chem. Soc., Chem. Commun., (1979), 1148) comme des catalyseurs acides forts. La définition comme superacide initialement adoptée a été revue à la baisse, et on admet maintenant couramment que ce sont des acides forts, capables d'isomériser les paraffines linéaires en iso-paraffines à 523 K environ. Dans la mesure où les sites acides n'ont pas pu être identifiés, ces solides sont caractérisés par une composition chimique et un mode de préparation.

Le solide décrit par Hino et Arata, obtenu par imprégnation de zircone par le métatungstate d'ammonium, doit subir une activation à une température comprise entre 1073 K et 1123 K pour être utilisable en tant que catalyseur d'isomérisation des paraffines. D'autres brevets encore (US 2 739 132, US 3 474 042) présentent de tels catalyseurs obtenus par imprégnation, sur divers supports comme la silice, des argiles, etc.

Kresge et coil. (US 5,902,767) ont décrit un catalyseur qui est actif après calcination à 873 K car il contient de faibles quantités de cuivre. Soled et coll. (US 5,113,034) ont en revanche préparé un solide avec du sulfate ou du tungstate et obtiennent un solide, qui est actif après une calcination entre 450°C et 800°C. En fait les exemples démontrent que la première calcination à 600°C est suivie d'une calcination à 800°C avant le chargement du catalyseur. Par la suite, Soled (US 5,648,589) s'est démarqué des travaux de Hino en imprégnant la zircone par une solution de silicate et de tungstate.

Dans le brevet US 5,510,309, Chang et coll. revendiquent un solide obtenu par coprécipitation de métatungstate d'ammonium et de $ZrOCl_2$ utilisé après calcination au-delà de 700°C, en fait 825°C dans les exemples. Cette procédure conduit à un solide acide, qui peut être additionné de platine et de fer pour donner un catalyseur d'isomérisation de paraffines (US 6,124,232), de dimérisation d'oléfines (US 5,453,556) ou même de réduction des oxydes d'azote.

Il n'existe donc pas jusqu'ici de catalyseur tungstène/zircone à forte teneur en tungstène et sans additif, et actif après calcination à une température inférieure ou voisine de 700°C, voire 600°C.

De plus, un paramètre important à prendre en compte pour apprécier l'activité catalytique des catalyseurs dans diverses réactions chimiques est le degré d'acidité du support catalytique. La structure des solides précédemment décrits a fait l'objet de nombreux travaux. La structure des sites acides de ces différents solides reste cependant toujours inconnue.

En effet, plusieurs auteurs proposent que les sites acides forts correspondent à la formation de micro domaines de trioxyde de tungstène ($WO_3$). Cette hypothèse permet de réconcilier plusieurs observations expérimentales : la croissance d'activité avec le pourcentage de tungstène (20% sur les plus actifs), la nécessité de chauffer le solide à une température ou le frittage commence à se manifester, ainsi que l'observation dans le spectre Raman des raies correspondant aux clusters de $WO_3$. E. Iglesia et al. (J. Phys. Chem. B, 103, (1999), 630-640) rapportent que, sur le solide tungstène/zircone décrit dans cette publication, les atomes de tungstène isolés sont dans un environnement octaédrique déformé, et qu'il n'y a pas de tungstène tétraédrique dans le cas de solide tungstène/zircone. Ce point de vue dominant est repris dans une publication de M. Scheithauer et coll. (J. Catal., 180, (1998), 1-13).

J. M. Parera et coll. (Applied Catalysis A : General, Elsevier Science, 163 (1-2), (5/12/1997), 165-175) présentent des catalyseurs à base d'oxyde de tungstène sur support zircone préparés à partir de solutions de métatungstate d'ammonium à pH 6 ou supérieur. Le tungstène, sous forme de monocouche sur le support, présente des espèces tétraédriques mais aussi des espèces octaédriques qui deviennent prépondérantes lorsque le taux de tungstène déposé augmente.

Sohn et Park (Langmuir, 14, (1998), 6140) ont préparé des catalyseurs $WO_3/ZrO_2$ ne contenant que 5% de

3

tungstène et qui présentent une raie Raman à 935 cm$^{-1}$ attribuée à des espèces tétraédriques. Cependant, cette bande disparaît au profit d'une bande attribuée au tungstène octaédrique lorsque la teneur en tungstène croit à 13%. De plus, une bande à 808 cm$^{-1}$ atteste la présence de micro cristaux de $WO_3$. En outre, ces catalyseurs présentent une acidité relativement faible.

On peut en déduire que les catalyseurs tungstène/zircone actuels comportent essentiellement du tungstène octaédrique, probablement en dioxyde de titane permettant de catalyser des réactions d'oxydation, d'époxydation, d'hydrodésulfuration, d'isomérisation, et autres, réactions effectuées notamment sur des produits provenant de l'industrie pétrochimique.

D'autres objectifs encore apparaîtront dans l'exposé de l'invention qui suit.

Ainsi, l'invention concerne tout d'abord un solide comprenant une monocouche d'oxyde de tungstène sur un support zircone et/ou dioxyde de titane, caractérisé en ce que la quantité de tungstène, sous forme d'espèces tétraédriques, déposé sur le support est comprise entre 10% et 25%, de préférence entre 15% et 25% en poids par rapport à la masse totale du support et en ce qu'il est obtenu par échange d'anions entre la zircone et l'acide peroxotungstique en milieu acide à pH inférieur à 3.

L'invention concerne plus spécifiquement un solide comprenant une monocouche d'oxyde de tungstène sur un support zircone et/ou dioxyde de titane, caractérisé en ce que :

a) la surface spécifique du solide, après chauffage à une température inférieure à 800°C, de préférence inférieure à 700°C, notamment inférieure à ou voisine de 600°C, est comprise entre 50 et 300 m$^2$/g, plus particulièrement entre 65 et 200 m$^2$/g, avantageusement entre 86 et 150 m$^2$/g.

L'invention concerne plus spécifiquement un solide comprenant une monocouche d'oxyde de tungstène sur un support zircone et/ou dioxyde de titane, caractérisé en ce que :

a) la surface spécifique du solide, après chauffage à une température inférieure à 800°C, de préférence inférieure à 700°C, notamment inférieure à ou voisine de 600°C, est comprise entre 50 et 300 m$^2$/g, plus particulièrement entre 65 et 200 m$^2$/g, avantageusement entre 86 et 150 m$^2$/g;
b) le solide présente une acidité totale mesurée par adsorption d'ammoniac comprise entre 0,1 et 0,5 mmol/g, de préférence entre 0,2 et 0,4 mmol/g, avantageusement d'environ 0,35 mmol/g de solide, après chauffage à une température inférieure à 800°C, de préférence inférieure à 700°C, notamment inférieure à ou voisine de 600°C.

**[0020]** [0021] D'autres objectifs encore apparaîtront dans l'exposé de l'invention qui suit.

**[0021]** [0022] Ainsi, l'invention concerne tout d'abord un solide comprenant une monocouche d'oxyde de tungstène sur un support zircone et/ou dioxyde de titane, caractérisé en ce que le tungstène présente une coordination tétraédrique, avant et après calcination.

**[0022]** [0023] L'invention concerne plus spécifiquement un solide comprenant une monocouche d'oxyde de tungstène sur un support zircone et/ou dioxyde de titane, caractérisé en ce que :

a) le tungstène présente une coordination tétraédrique, avant et après calcination ;
b) la surface spécifique du solide, après chauffage à une température inférieure à 800°C, de préférence inférieure à 700°C, notamment inférieure à ou voisine de 600°C, est comprise entre 50 et 300 m$^2$/g, plus particulièrement entre 65 et 200 m$^2$/g, avantageusement entre 86 et 150 m$^2$/g.

**[0023]** [0024] L'invention concerne plus spécifiquement un solide comprenant une monocouche d'oxyde de tungstène sur un support zircone et/ou dioxyde de titane, caractérisé en ce que :

a) le tungstène présente une coordination tétraédrique, avant et après calcination ;
b) la surface spécifique du solide, après chauffage à une température inférieure à 800°C, de préférence inférieure à 700°C, notamment inférieure à ou voisine de 600°C, est comprise entre 50 et 300 m$^2$/g, plus particulièrement entre 65 et 200 m$^2$/g, avantageusement entre 86 et 150 m$^2$/g ;
c) le solide présente une acidité totale mesurée par adsorption d'ammoniac comprise entre 0,1 et 0,5 mmol/g, de préférence entre 0,2 et 0,4 mmol/g, avantageusement d'environ 0,35 mmol/g de solide, après chauffage à une température inférieure à 800°C, de préférence inférieure à 700°C, notamment inférieure à ou voisine de 600°C.

Par "monocouche", on entend une seule couche moléculaire d'oxyde de tungstène, sans formation de cristaux de l'oxyde. En effet, la présence de cristaux de trioxyde de tungstène ($WO_3$), qui présente du tungstène sous forme de coordination octaédrique, ne convient pas au solide selon la présente invention.

La coordination tétraédrique du tungstène est confirmée par spectrométrie Raman, une raie de résonance à

935 cm$^{-1}$, maintenue après calcination à une température voisine de 600°C, voire supérieure à 700°C. Les raies de résonance vers 800 cm$^{-1}$ et 1000 cm$^{-1}$, caractéristiques du tungstène octaédrique et de micro cristaux de WO$_3$ sont absentes du spectre Raman du solide selon la présente invention.

Le solide selon la présente invention comprend du tungstène, sous forme oxydée, déposé en monocouche sur un support zircone et/ou dioxyde de titane. Par support zircone et/ou dioxyde de titane, on entend que le support peut être constitué de zircone pure ou de dioxyde de titane pur ou encore d'un mélange de zircone et de dioxyde de titane, en toutes proportions.

Dans le solide selon la présente invention, la quantité de tungstène déposée sur le support est comprise entre 0,5% en poids et 80% en poids, avantageusement entre 1% et 40%, de préférence entre 2% et 25% en poids par rapport à la masse totale du solide.

Selon un mode de réalisation préférée de la présente invention, le solide comprend une monocouche de tungstène sous forme d'espèces tétraédriques en une quantité comprise entre 5% en poids et 25% en poids, avantageusement entre 10% et 25%, de préférence entre 15% et 25% en poids par rapport à la masse totale du solide.

Le solide selon l'invention présente des propriétés catalytiques tout à fait intéressantes et présente en outre l'avantage, par rapport aux catalyseurs connus de l'art antérieur, de pouvoir être utilisé sans avoir subi de calcination préalable, généralement nécessaire pour activer le catalyseur. Il est cependant possible d'activer thermiquement le solide selon l'invention, et, dans ce cas, une température de calcination inférieure à 800°C, plus particulièrement inférieure à 700°C, et avantageusement voisine ou inférieure à environ 600°C est suffisante. Cette température correspond également à la température suffisante pour régénérer le catalyseur.

Le solide de l'invention peut bien entendu être calciné (activé et/ou régénéré) à des températures supérieures, telles que celles habituellement rencontrées pour les catalyseurs tungstène/zircone de l'art antérieur, températures qui sont généralement égales ou supérieures à 800°C. On notera cependant l'avantage économique et environnemental important de disposer de catalyseurs dont les températures d'activation et/ou régénération sont relativement basses, en particulier inférieures aux températures des catalyseurs disponibles jusqu'à présent.

Le solide selon la présente invention peut en outre comprendre un ou plusieurs métaux connus pour leurs activités catalytiques, comme par exemple, le platine, le palladium, le rhodium, le cobalt, le nickel, le fer, etc. Ainsi, les solides de l'invention peuvent être par exemple avantageusement additionnés de palladium ou de platine, afin de catalyser des réactions d'hydrogénation, par exemple hydrogénation de composés aromatiques des carburants en naphtènes.

La présente invention concerne également un procédé de préparation du solide tungstène/zircone et/ou dioxyde de titane, caractérisé en ce que l'on dépose une monocouche d'ions $WO_4^{2-}$ sur un support zircone et/ou dioxyde de titane.

Le moyen d'obtenir de telles espèces supportées a été trouvé en utilisant un échange d'anions avec la zircone. Parmi les composés du tungstène, l'acide peroxotungstique ($H_2W_2O_{11}$) est stable en milieu très acide, ce qui permet un échange ionique dans de bonnes conditions. L'utilisation de ce composé permet d'obtenir une monocouche de tungstène à la surface du support, par exemple 20% en poids de tungstène, avec une surface initiale de support d'environ 300 m$^2$/g dans le cas d'un support zircone pur.

De manière très surprenante le solide obtenu par cette technique présente une raie Raman importante à environ 935 cm$^{-1}$, attribuable au tungstène tétraédrique, sans bandes à 1000 cm$^{-1}$, ni à 800 cm$^{-1}$ attribuables aux microcristaux octaédriques de trioxyde de tungstène (WO$_3$). Il doit être en outre signalé ici que ces spectres sont obtenus après chauffage sous air à 600°C.

Plus particulièrement, le procédé selon la présente invention est caractérisé en ce qu'il comprend les étapes de :

a) oxydation d'acide tungstique en acide peroxotungstique ($H_2W_2O_{11}$) ;
b) échange d'anions, en milieu acide, de préférence inférieur à pH 3, entre la solution d'acide peroxotungstique ainsi obtenu et un support zircone (ZrO$_2$) hydraté et/ou dioxyde de titane (TiO$_2$) hydraté ; et
c) récupération du solide tungstène/zircone et/ou dioxyde de titane.

Dans la première étape a), l'oxydation de l'acide tungstique peut être effectuée selon diverses méthodes, avantageusement sous l'action de peroxyde d'hydrogène, sans être toutefois limité à cet agent d'oxydation. Selon une alternative, il peut être avantageux d'oxyder du trioxyde de tungstène (WO$_3$) hydraté dans le peroxyde d'hydrogène dilué de 10% à 80%, de préférence de 15% à 60%, par exemple à 30%. D'autres méthodes encore pourront être utilisées pour autant qu'elles conduisent à la formation d'anions $WO_4^{2-}$, seuls à pouvoir ensuite être échangés avec la zircone hydratée et/ou le dioxyde de titane hydraté, en milieu acide, de préférence inférieur à pH 3, tout en conservant une structure tétraédrique.

Le procédé selon l'invention permet d'obtenir un acide peroxotungstique ($H_2W_2O_{11}$) très acide, possédant un pH inférieur à 3, et avec la particularité de se fixer facilement sur un support zircone et/ou dioxyde de titane. En effet, le dioxyde de zirconium, le dioxyde de titane et leurs mélanges présentent les propriétés d'être des solides amphotères et échangeurs d'anions dans cette zone acide (pH < 3).

Selon un mode de réalisation particulièrement préféré, le procédé de la présente invention met en oeuvre un support comprenant de la zircone pure, c'est-à-dire sans dioxyde de titane. L'invention n'est toutefois pas limitée à ce seul type de support et comprend également les solides à support $TiO_2$ pur, c'est-à-dire sans zircone, mais aussi les solides dont le support consiste en un mélange de zircone et de $TiO_2$, en toutes proportions. Des charges, additifs et autres, connus de l'homme du métier peuvent également être ajoutés à l'oxyde ou au mélange d'oxydes formant le support des solides selon l'invention.

Jusqu'à présent, les précurseurs utilisés pour fixer le tungstène sur un support tel que la zircone étaient les métatungstates d'ammonium $[(NH_4)_6H_2W_{12}O_{40}]$, pour lesquels, il est connu des ouvrages généraux de chimie minérale (par exemple celui de P. Pascal) que le tungstène était engagé dans une structure de Keggin, formée d'octaèdres. Cette structure ne se transforme cependant en structure $WO_4^{2-}$ tétraédrique qu'à des pH très basiques, valeurs de pH auxquelles la zircone n'échange plus que des cations.

Il a été découvert de manière surprenante que, selon le procédé de la présente invention, l'acide peroxotungstique se décompose à la surface du support en espèces mononucléaires tétraédriques. Ceci a pour conséquence de modifier favorablement les propriétés acides du catalyseur obtenu.

En effet, un catalyseur fortement acide améliore considérablement les propriétés, telles que par exemple cinétiques, sélectivités et rendements, de nombreuses réactions chimiques catalytiques, notamment dans le domaine de la pétrochimie. En particulier, le solide selon l'invention possède des propriétés d'oxydation inconnues jusqu'à présent sur les catalyseurs usuels dans lequel le tungstène se dissout plus facilement.

Ainsi, la présente invention concerne également l'utilisation du solide tungstène/zircone et/ou dioxyde de titane tel que défini précédemment comme catalyseur acide thermiquement stable, catalyseur d'oxydation et d'époxydation, ou encore d'hydrodésulfuration par addition de nickel.

D'autres champs d'application sont par exemple l'isomérisation de paraffines et d'oléfines, l'hydrogénation des aromatiques, l'oxydation en phase liquide des composés soufrés ou des oléfines, la bromation d'oléfines et en général tous types de réactions connues catalysées généralement par les systèmes tungstène octaédrique/zircone (isomérisation des paraffines linéaires en isoparaffines : Hino et al., J. Chem. Soc., Chem. Commun., (1979), 1148), par les systèmes tungstène/zircone modifiés par le fer ou additionnés de platine (isomérisation des alcanes à basses températures : Hsu et coll., Chem. Commun., (1992), 1645) ou encore par les systèmes tungstène/hydrotalcites (de Vos et al., Catal. Today, 60, (2000), 209-218), pour ne citer que certaines de ces réactions, de manière non limitative.

Il a en effet été découvert de manière surprenante que les catalyseurs solides selon la présente invention présentent des propriétés catalytiques bien supérieures aux catalyseurs connus de l'art antérieur pour le même type de réaction. Parmi ces propriétés améliorées, on peut citer entre autres la plus faible température d'activation, environ 600°C (ou environ 873 K) par rapport à des températures avoisinant les 800°C pour les catalyseurs habituels, ce qui permet d'accroître la surface spécifique du catalyseur et donc son efficacité.

Alors que les solides obtenus dans l'art antérieur présentent une coordination octaédrique du tungstène ou des microcristaux de trioxyde de tungstène, la coordination tétraédrique du tungstène confère une plus grande acidité au solide selon l'invention, et par conséquent de meilleurs rendements pour les réactions à catalyse acide (telles que oxydation, époxydation, etc.).

En outre, le solide selon la présente invention possède une grande stabilité chimique et thermique, garantissant ainsi une meilleure aptitude à la régénération du solide.

Ainsi, les solides selon l'invention trouvent une application tout particulièrement intéressante dans les réactions catalytiques d'oxydations de dérivés soufrés, notamment ceux présents dans les hydrocarbures, avant voire après raffinage. Les solides selon l'invention sont ainsi particulièrement adaptés pour la désulfuration des hydrocarbures, notamment des carburants, par exemple les essences, kérosènes et gazoles. En particulier, les solides selon la présente invention se sont révélés être des catalyseurs très performants dans les réactions d'oxydations des benzothiophènes et/ou dibenzothiophènes, substitués ou non.

Les composés soufrés sont particulièrement indésirables dans les hydrocarbures liquides. En effet, à la présence de soufre est associée la corrosion des appareillages et la détérioration des moteurs à combustion. Le soufre empoisonne également les catalyseurs métalliques utilisés dans le raffinage du pétrole et la conversion catalytique des effluents gazeux. Il est en outre reconnu que l'émission des produits soufrés dans l'atmosphère contribue aux pluies acides et à la formation d'ozone, et la spécification actuelle de 500 ppm maximum de soufre, dans le gazole notamment, doit décroître à seulement quelques ppm dans le futur, ce qui demandera des procédés de plus en plus efficaces.

Les composés soufrés, tels que les sulfures, bisulfures et mercaptans, sont d'élimination facile par des procédés de bas coût, mais les thiophènes, comme le benzothiophène (BT), les dibenzotiophènes (DBT) et leurs dérivés, notamment les dérivés substitués, sont plus difficiles à éliminer, étant donné qu'il s'agit de molécules réfractaires.

Il existe pourtant des procédés permettant d'éliminer le soufre du pétrole et ses dérivés par hydrodésulfuration des BT et des DBT. Cependant, le coût de ces procédés reste très élevé, principalement du fait des conditions opératoires, de la consommation d'hydrogène, et des procédés de post-traitement des gaz, tel que le procédé Claus. De plus, les technologies actuelles de désulfuration des hydrocarbures nécessitent d'être améliorées pour conduire à des produits à teneur en soufre encore inférieure. Les coûts fixes augmentent malheureusement considérablement avec le niveau d'extraction. C'est pourquoi, des procédés alternatifs sont proposés, comme l'adsorption, les procédés biologiques et l'oxydation, cette dernière technique étant une alternative de bas coût qui peut éventuellement remplacer l'hydrodésulfuration.

En particulier, le procédé d'oxydation des composés soufrés, tels que les BT et DBT, est notamment une alternative à l'hydrodésulfuration car ces composés sont oxydés en sulfoxydes et sulfones, solubles dans les solvants polaires et peuvent ainsi être facilement extraits par des moyens physiques, comme décrit dans la demande de brevet WO 01/48119.

L'oxydation du dibenzothiophène a été prouvée être possible par des catalyseurs basiques comme les hydrotalcites, en présence de peroxyde d'hydrogène et d'un nitrile. Cependant, ces oxydes mixtes de Magnésium-Aluminium sont peu efficaces, du fait de leur forte basicité qui induit la décomposition du peroxyde d'hydrogène.

Les hydrotalcites à l'état de meixnerites réhydratées sont très actives, oxydant le DBT jusqu'à 98% en 30 minutes dans des systèmes liquides monophasiques, cette conversion atteignant 99% en 45 minutes dans un système à 3 phases. Cependant, il est nécessaire d'utiliser des composés comportant une fonction nitrile, conduisant à des sous-produits (acétamide notamment) difficiles à éliminer, rendant ainsi le procédé peu transposable à l'échelon industriel.

De manière surprenante, il a été découvert que les solides selon la présente invention sont beaucoup plus actifs pour l'oxydation des thiophènes et dérivés tels que les BT et DBT, substitués ou non. En effet, la structure tétraédrique du tungstène étant très stable, même à hautes températures, il a pu être observé des conversions de l'ordre de 99% en des temps de 5 minutes avec le peroxyde d'hydrogène, et de 70% après une heure avec l'hydroperoxyde de tert-butyle (TBHP), conversions qui sont tout à fait compatibles avec une application industrielle. Même en présence de solvant nitrile, les solides de la présente invention ne conduisent que peu ou pas du tout à la formation de sous-produits gênants

La présente invention concerne donc également un procédé de désulfuration par oxydation de composés ou de compositions contenant des composés soufrés, caractérisé en ce qu'il comprend les étapes de :

> a) mise en contact du composé ou de la composition à désulfurer avec un agent oxydant et un solide comprenant une monocouche de tungstène tétraédrique, déposée sur un support zircone et/ou dioxyde de titane ;
> b) réalisation de la réaction d'oxydation, dans un solvant approprié, de préférence à pression atmosphérique, et à une température appropriée, de préférence entre 20°C et la température d'ébullition du solvant ;
> c) élimination des produits d'oxydation du composé ou de la composition de départ.

Il doit être compris que, dans le procédé ci-dessus, le support zircone et/ou dioxyde de titane signifie un support à base de zircone, ou à base de dioxyde de titane ou encore à base d'un mélange des deux oxydes précités, dans toutes proportions. On préfère les solides dans lequel le support comprend de la zircone pure, c'est-à-dire sans dioxyde de titane.

Par composé ou composition à désulfurer, on entend plus particulièrement les produits issus de la distillation du pétrole, qu'ils soient raffinés ou non. De tels produits issus de la distillation du pétrole sont par exemple les hydrocarbures, notamment les carburants, en particulier les essences, kérosènes et gazoles, plus spécifiquement les gazoles.

Par composés soufrés, il doit être entendu de préférence les composés thiophéniques, habituellement présents dans les produits issus de la distillation du pétrole, tels que par exemple le benzothiophène (BT), le dibenzothiphène (DBT) et leurs dérivés, notamment leurs dérivés substitués par un ou plusieurs groupements, choisis notamment parmi les alkyles, en particulier le méthyle. Le procédé selon la présente invention s'est avéré par exemple particulièrement efficace pour l'oxydation du DBT et ses dérivés substitués, tels que les mono-, di-, tri- ou tétra-alkylbenzothiophènes.

Grâce à la combinaison de l'agent oxydant et du catalyseur solide selon l'invention, les atomes de soufre des composés thiophéniques sont oxydés en groupements sulfones. Les composés sulfonés ainsi obtenus peuvent ainsi être facilement éliminés du milieu réactionnel selon des techniques classiques connues en soi, telles que décantation, séparation de phases, distillation, etc.

L'agent oxydant peut également être de tout type connu de l'homme du métier, et est avantageusement choisi parmi les peroxydes, notamment le peroxyde d'hydrogène ou l'hydroperoxyde de tert-butyle. Ces agents oxydants peuvent être utilisés seuls ou en mélange.

De même les solvants seront choisi en fonction du composé ou de la composition à désulfurer et pourront par exemple être choisis parmi l'eau, les alcanes, par exemple hexane, heptane, octane, nonane, décane, les alcanols, par exemple le 2-butanol, les solvants polaires en général, comme par exemple les nitriles (acétonitrile) ou les éthers cycliques (tétrahydrofurane, dioxane). Le choix du solvant est en fait lié à la nature de la réaction à réaliser, et sera ainsi surtout guidé par des considérations de non toxicité en général requises pour des applications industrielles et eu égard à la protection de l'environnement. Il est bien entendu que des mélanges de solvants peuvent être utilisés, et également que la réaction peut avoir lieu en phase homogène, hétérogène, monophasique, biphasique, voire triphasique. Le composé ou la composition à désulfurer peut également servir de solvant à la réaction.

Il peut en outre être avantageux d'extraire les sulfones du milieu réactionnel au fur et à mesure de leur formation de manière à déplacer l'équilibre réactionnel et accroître ainsi l'efficacité du procédé. Bien qu'il soit préféré de conduire la réaction d'oxydation en milieu homogène, l'utilisation de solvant polaire dans un milieu réactionnel multiphasique présente ainsi l'avantage de solubiliser les sulfones et déplacer ainsi l'équilibre comme décrit précédemment.

Le rapport oxydant/composés à oxyder peut varier dans de larges proportions, selon les conditions opératoires, la nature de l'oxydant, du composé à oxyder, du solvant utilisé et le taux de transformation souhaité ainsi que de la durée de la réaction envisagée. Ainsi, le rapport oxydant/composés à oxyder peut par exemple varier de 100/1 à 1/100, de préférence de 100/1 à 1/1. Des résultats tout à fait satisfaisant ont été obtenus avec des ratios oxydant/composés à oxyder compris entre 20/1 et 1/1, tout particulièrement compris entre 10/1 et 2/1.

Le procédé de l'invention s'est ainsi montré être particulièrement efficace pour l'oxydation des composés thiophéniques contenus dans les gazoles, avec des taux de conversion en sulfones compris généralement entre 80% et 99,9% selon les conditions opératoires.

La présente invention concerne par conséquent également les carburants, notamment les gazoles, désulfurés par le procédé de la présente invention.

Les exemples suivants illustrent les objets de la présente invention, sans toutefois la limiter d'aucune façon.

**Exemple A : Préparation et caractérisation des catalyseurs solides**

Exemple A1 : Préparation d'un support zircone

Le support zircone est disponible dans le commerce (par exemple chez MEL® Chemicals) ou bien encore peut être préparé selon des techniques connues en soi, et par exemple selon le mode opératoire suivant :

On réalise un précipitation d'hydroxyde de zirconium à pH = 9, à partir de 100 mL d'une solution 0,4 M de $ZrOCl_2, 8H_2O$ et d'une solution d'ammoniaque (28%). La suspension est vieillie pendant 2 heures, puis séparée par centrifugation, lavée plusieurs fois avec de l'eau déionisée jusqu'à élimination complète des anions chlorures. Le gel blanc obtenu est séché à 110°C pendant 22 h, puis broyé.

Exemple A2 : Préparation du catalyseur

Des catalyseurs tungstène/zircone, avec différentes teneurs en tungstène ont été préparés à partir de zircone obtenue par sol-gel, et utilisée à l'état hydraté, selon les modes opératoires suivants :

a) Préparation de $ZW_{0,1}600$

Une solution d'acide tungstique 0,1 M est réalisée par dilution de 6,25 g d'acide tungstique dans 250 mL de peroxyde d'hydrogène à 35%. On fait ensuite l'échange anionique entre la solution d'acide tungstique et l'hydroxyde de zirconium. On compte 75 mL de solution pour 5g d'hydroxyde, dans le cas étudié, 10 g d'hydroxyde de zirconium dans 150 mL de solution d'acide tungstique. L'ensemble est agité pendant 15 min, filtré puis placé à l'étuve à 80°C pendant 24 heures. Enfin, le solide est calciné sous air (débit 20 $cm^3$/min) à 600°C pendant 3 heures. Cette zircone tungstée contient 19,4% de tungstène.

b) Préparation de $ZW_{0,25}700$

On prépare une solution d'acide tungstique à 0,25 M par dilution de 15,62 g d'acide tungstique dans 250 mL de peroxyde d'hydrogène à 35%. La suite de la préparation est identique à celle de $ZW_{0,1}600$, le solide étant calciné à 700°C au lieu de 600°C. Cette zircone tungstée contient 19,8% de tungstène, ce qui montre que l'équilibre est entièrement déplacé vers la fixation de tungstène sur la zircone.

c) Préparation de Zr-1, Zr-2, Zr-3 et Zr-4

Pour ces catalyseurs, on a utilisé une zircone commerciale disponible chez MEL® Chemicals (référence MELCAT F20 922/1), de surface spécifique de 309 $m^2$/g, échangée par une solution d'acide pertungstique 0,12 M à température ambiante.

Le solide (désigné par Zr-1 dans la suite) a été obtenu en utilisant un excès de tungstène (50 mL de solution 0,1 M pour 2 g de solide). Des catalyseurs Zr-2 à Zr-4, moins concentrés, sont obtenus en diminuant la quantité de solution de tungstène.

Ont ainsi été préparés les solides Zr-1, Zr-2, Zr-3 et Zr-4, dont les teneurs en tungstène W% (exprimées en pourcentage en poids de tungstène) sont données dans le Tableau 1 suivant :

### - Tableau I -

| Catalyseur | W% |
|---|---|
| Zr-1 | 20,61 |
| Zr-2 | 2,14 |
| Zr-3 | 5,19 |
| Zr-4 | 10,17 |

### *d) Préparation d'un catalyseur non-conforme à l'invention (exemple comparatif)*

Le catalyseur $ZW_1$ a été préparé selon la méthode décrite par E. Iglesia et al., J. Catal., 194, (2000), 175-187 :

De la zircone hydratée (1 g) est imprégnée à température ambiante par 0,29 mL de métatungstate en solution aqueuse (0,23 M) et agitée pendant 1 heure. Le solide résultant est séché pendant 12 heures à 110°C, puis calciné à 800°C pendant 3 heures sous air sec (20 $CM^3.min^{-1}$). Ce solide contient 19,1% de tungstène et est désigné par $ZW_1$ dans la suite.

### *Caractérisations physico-chimiques des solides*

Les catalyseurs solides Zr-1 à Zr-4 ont été analysés pour leurs propriétés physiques et chimiques, avec les résultats suivants :

### *a) Diffraction des rayons X*

La structure de ces solides, confirmé par diffraction de rayons X, est plutôt amorphe (absence de micro cristaux de $WO_3$ avec de faibles proportions de zircone tétraédrique révélée par la bande large à 2 θ égale à 30°.

### b) *Propriétés texturales*

Les isothermes d'adsorption de ces solides sont de type I correspondant à des échantillons microporeux. Les analyses ont été effectuées sur les échantillons imprégnés et évacués sur vide à 523 K. Aucune calcination n'a été faite avant ce traitement. Les propriétés sont résumées dans le tableau II suivant :

### - Tableau II -

| Catalyseur | $S_{TOT.BET}$ (m²/g) | $S_{microporeux}$ (m²/g) | $V_{microporeux}$ (mL/g) |
|---|---|---|---|
| Zircone de départ | 308,8 | 188,3 | 0,085 |
| Zr-1 | 295,5 | 111,5 | 0,044 |

| Catalyseur | $S_{TOT.BET}$ (m²/g) | $S_{microporeux}$ (m²/g) | $V_{microporeux}$ (mUg) |
|---|---|---|---|
| Zr-2 | 313,6 | 189,9 | 0,083 |
| Zr-3 | 349,3 | 195,1 | 0,087 |
| Zr-4 | 370,7 | 233,6 | 0,103 |

L'incorporation de tungstène sur la zircone a pour effet une augmentation des propriétés texturales pour une teneur en tungstène variant de 2 à 10 %, et diminuant avec une teneur en tungstène de 20 %.

c) *Spectroscopie Raman*

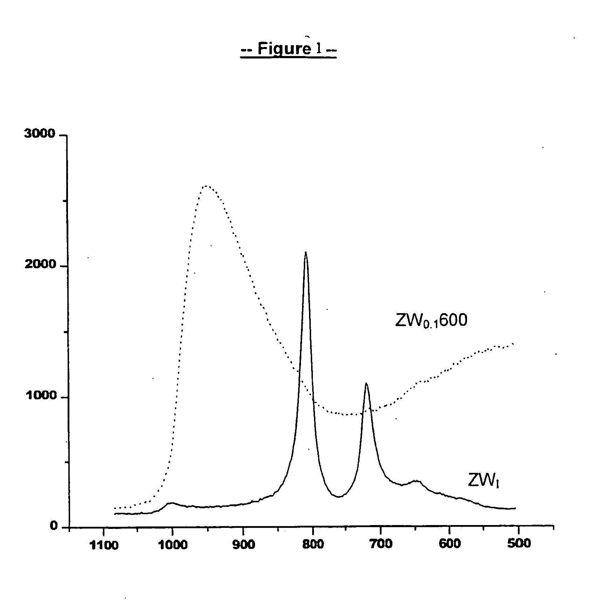

Le spectre Raman du solide tungstène/zircone $ZW_{0,1}600$, préparé avec une concentration 0,1 M d'acide tungstique, puis calciné à 600°C est présenté sur la Figure 1. Sur cette même Figure 1 a été porté le spectre Raman du catalyseur tungstène/zircone $ZW_1$.

Sur cette Figure 1 sont portés :

- en abscisse, les longueurs d'onde en $cm^{-1}$ ;
- en ordonnée, l'amplitude du signal;
- en pointillé, le spectre Raman du catalyseur $ZW_{0,1}600$ ; et
- en trait plein, le spectre Raman du catalyseur $ZW_1$.

La bande à 935 $cm^{-1}$ est attribuée au tungstène tétraédrique, alors que le solide $ZW_1$ présente les raies du tungstène octaédrique, en accord avec les publications de E. Iglesia et al. (cf. *supra).*

d) *Aire spécifique*

Le tableau III montre l'influence de la température de calcination et de la concentration de la solution d'acide tungstique sur l'aire BET et la taille des pores des solides selon la présente invention. Ces données sont déduites des isothermes d'adsorption d'azote sur les solides préparés à partir de zircone hydratée possédant une aire BET égale à 211 $m^2.g^{-1}$, et un diamètre moyen de pores de 1,4 nm.

**- Tableau III -**

| Concentration $H_2WO_5$ | 0,1 M | 0,25 M | 0,5 M | $ZW_1$ |
|---|---|---|---|---|
| T calcination : 600°C | 96 $m^2.g^{-1}$ Ø = 1,6 nm | 121 $m^2.g^{-1}$ Ø =1,7 nm | 125 $m^2.g^{-1}$ Ø = 1,8 nm | |
| T calcination : 800 °C | 55 $m^2.g^{-1}$ 4<Ø<7 nm | 44 $m^2.g^{-1}$ 4<Ø<8nm | 43 $m^2.g^{-1}$ 4<Ø<8nm | 44 $m^2.g^{-1}$ 8<Ø<18 nm |

e) *Acidité des solides*

L'acidité de ces solides a été mesurée par adsorption d'ammoniac, exprimée en mmole d'ammoniac par gramme de catalyseur et en mole d'ammoniac par mole de tungstène. Les résultats sont résumés dans le tableau IV ci-dessous.

**- Tableau IV -**

| Catalyseurs | Tungstène (% en poids) | mmole $NH_3$/ g. de catalyseur | mole $NH_3$/mole W |
|---|---|---|---|
| $ZW_{0.1}600$ | 19,4 | 0,35 | 0,33 |
| $ZW_{0.1}800$ | 19,5 | 0,32 | 0,30 |
| $ZW_1$ | 19,1 | 0,14 | 0,14 |

Le catalyseur de l'invention présente un nombre de sites acides, par gramme ou mole de tungstène, double du catalyseur $ZW_1$. Ceci est cohérent avec la coordination tétraédrique du tungstène des solides de la présente invention observée en Raman.

Ces propriétés acides correspondent aussi à des propriétés catalytiques intéressantes pour l'isomérisation des paraffines dans laquelle un catalyseur platine-tungstène/zircone calciné à 600°C présente une activité, et se régénère réversiblement (cf. Exemple C *infra).*

**Exemple B : Exemple de conversion de dibenzothiophène en sulfone**

Avec chacun des catalyseurs Zr-1, Zr-2, Zr-3 et Zr-4 précédemment décrits, on réalise des essais d'oxydation de dibenzothiophène (0,5 mmol) avec du peroxyde d'hydrogène (5 mmol) dans 10 mL d'acétonitrile, à une température de 298 K (60°C), et une quantité de catalyseur de 0,1 g. Les réactions sont conduites dans un réacteur de 30 mL muni d'un réfrigérant et d'un septum pour le prélèvement d'échantillons. La température est stabilisée par bain d'huile.

Les résultats sont présentés sur la Figure II. La conversion de DBT en sulfone est obtenue avec un ordre d'activité Zr-1 > Zr-4 > Zr-3 > Zr-2, identique à celui de la teneur en tungstène dans les catalyseurs. L'équilibre est atteint en 5 minutes avec des conversions allant jusqu'à 99 % pour le solide Zr-1. Cette haute activité est attribuée au tungstène tétraédrique formé à partir de l'acide peroxotungstique. Aucune formation d'acétamide (provenant de l'acétonitrile) n'a été observée, montrant que le mécanisme de la réaction est différent des mécanismes basiques connus.

À titre de comparaison, un test comparatif a été conduit, dans les mêmes conditions (DBT : 0,5 mmol, $H_2O_2$: 5 mmol, solvant : acétonitrile, température de réaction : 60°C), avec 100 mg du catalyseur $ZW_1$ calciné à 800°C. Le pourcentage de conversion en fonction du temps est présenté à la Figure III et montre clairement la supériorité du catalyseur Zr-1 de la présente invention.

### Effets de la concentration en oxydant

L'utilisation de quantités élevées de peroxyde d'hydrogène a des répercussions sur les coûts fixes du procédé et il est donc nécessaire de déterminer la concentration minimale d'oxydant qui peut être utilisé sans perte d'activité. En reprenant les conditions opératoires exposées précédemment, divers tests ont été réalisés en faisant varier la concentration de l'oxydant. Le solvant utilisé dans ces expériences est le 2-butanol. Les résultats sont présentés sur la Figure IV, où apparaissent les divers taux de conversion du DBT en fonction du temps, pour des rapports oxydant/DBT variant de 1 à 10.

La conclusion de ces tests est qu'il est possible de travailler avec des ratios oxydant/DBT inférieurs à 10. En particulier, un ratio égal à 4 est acceptable sans perte d'activité, et une conversion de 70 % peut être atteinte avec un rapport de 2, ce qui peut rendre le procédé économiquement plus attractif.

### Exemple C : Exemple d'isomérisation d'alcanes

Cet exemple présente la capacité des catalyseurs selon l'invention à isomériser sélectivement l'hexane en méthylpentanes.

On réalise un mélange mécanique de 80 mg de zircone tungstée selon l'invention avec 80 mg de platine/silice ($Pt/SiO_2$). La réaction est conduite en phase gazeuse à 225°C, sous débit d'hydrogène et d'azote, avec $D_T$ = 1,9 L/h, $P_{H2}$ = 5,60 kPa et $P_{Hexane}$ = 5,47 kPa.

La réaction se produit par catalyse bi-fonctionnelle, et dans les conditions de la réaction, la vitesse est limitée par la fonction acide. Ce test permet donc de constater (voir Figure V) la plus forte acidité de la préparation revendiquée, après calcination à plus basse température (700°C contre 800°C pour $ZW_1$).

### Exemple D : Exemple d'époxydation d'oléfines

On réalise l'époxydation de 5 mmol de cyclohexène, avec 12,5 mmol de peroxyde d'hydrogène et 0,1 g de catalyseur Zr-3 décrit précédemment, dans 10 mL de méthanol. La réaction est étudiée à 298 K et à 348 K et les résultats, après une heure de réaction sont présentés dans le tableau V suivant :

**-** Tableau V -

| Catalyseur | Rendement époxydation (%) | Oxydant | Température (K) |
|---|---|---|---|
| Zr-3 | 9,8 | $H_2O_2$ | 298 |

| Catalyseur | Rendement époxydation (%) | Oxydant | Température (K) |
|---|---|---|---|
| Zr-3 | 38,1 | $H_2O_2$ | 348 |
| Zr-3 | 27,9 | TBHP | 348 |

Les produits sont l'époxyde seul à 298 K et le cyclohexanediol à 348 K.

**Revendications**

**1.** Solide comprenant une monocouche d'oxyde de tungstène sur un support zircone et/ou dioxyde de titane, **caractérisé en ce que** la quantité de tungstène, sous forme d'espèces tétraédriques, déposé sur le support est comprise entre 10% et 25%, de préférence entre 15% et 25% en poids par rapport à la masse totale du support et **en ce qu'**il est obtenu par échange d'anions entre la zircone et l'acide peroxotungstique en milieu acide à pH inférieur à 3.

2. Solide selon la revendication 1, **caractérisé en ce que** le support est un support zircone.

3. Solide selon l'une quelconque des revendications précédentes, **caractérisé en ce qu'**il comprend en outre un ou plusieurs métaux choisis parmi le platine, le rhodium, le cobalt, le palladium, le nickel et le fer.

4. Solide selon l'une quelconque des revendications précédentes, **caractérisé en ce que** la coordination tétraédrique du W est maintenue après calcination à une température voisine de 600 °C, voire supérieure à 700 °C.

5. Solide selon l'une quelconque des revendications précédentes, **caractérisé en ce que**

   a) la surface spécifique du solide, après chauffage à une température inférieure à 800°C, de préférence inférieure à 700°C, notamment inférieure à ou voisine de 600°C, est comprise entre 50 et 300 m$^2$/g, plus particulièrement entre 65 et 200 m$^2$/g, avantageusement entre 86 et 150 m$^2$/g.

6. Solide selon l'une quelconque des revendications, **caractérisé en ce que** :

   a) la surface spécifique du solide, après chauffage à une température inférieure à 800°C, de préférence inférieure à 700°C, notamment inférieure à ou voisine de 600°C, est comprise entre 50 et 300 m$^2$/g, plus particulièrement entre 65 et 200 m$^2$/g, avantageusement entre 86 et 150 m$^2$/g ;
   b) le solide présente une acidité totale mesurée par adsorption d'ammoniac comprise entre 0,1 et 0,5 mmol/g, de préférence entre 0,2 et 0,4 mmol/g, avantageusement d'environ 0,35 mmol/g de solide, après chauffage à une température inférieure à 800°C, de préférence inférieure à 700°C, notamment inférieure à ou voisine de 600°C.

7. Procédé de préparation d'un solide selon l'une des revendications 1 à 6, **caractérisé en ce qu'**une monocouche d'ions $WO_4^{2-}$ est déposée sur un support de zircone et/ou dioxyde de titane, et **en ce qu'**il comprend les étapes de :

   a) oxydation d'acide tungstique en acide peroxotungstique ($H_2W_2O_{11}$);
   b) échange d'anions, en milieu acide, de préférence inférieur à pH 3, entre la solution d'acide peroxotungstique ainsi obtenu et un support zircone ($ZrO_2$) hydraté et/ou dioxyde de titane ($TiO_2$) hydraté; et
   c) récupération du solide tungstène/zircone et/ou dioxyde de titane.

8. Procédé de préparation d'un solide selon l'une des revendications 1 à 6, **caractérisé en ce** en ce qu'une monocouche d'ions $WO_4^{2-}$ est déposée sur un support de zircone et/ou dioxyde de titane, et qu'il comprend les étapes de :

   a) oxydation de trioxyde de tungstène ($WO_3$) hydraté en présence d'un agent d'oxydation ;
   b) échange d'anions, en milieu acide, de préférence inférieur à pH 3, entre la solution d'acide peroxotungstique ainsi obtenu et un support zircone ($ZrO_2$) hydraté et/ou dioxyde de titane ($TiO_2$) hydraté ; et
   c) récupération du solide tungstène/zircone et/ou dioxyde de titane.

9. Utilisation d'un solide selon l'une des revendications 1 à 6 comme catalyseur de réactions d'oxydation, d'époxydation, d'hydrodésulfuration d'isomérisation de paraffines et d'oléfines, d'hydrogénation de composés aromatiques, d'oxydation de composés soufrés ou d'oléfines.

10. Utilisation selon la revendication 9, **caractérisée en ce que** la réaction catalysée est une réaction à catalyse acide.

11. Utilisation selon l'une des revendications 9 ou 10, **caractérisée en ce que** la réaction est une réaction catalytique d'oxydation de dérivés soufrés, notamment ceux présents dans les hydrocarbures, avant voire après raffinage.

12. Utilisation selon l'une quelconque des revendications 9 à 11 pour la désulfuration des hydrocarbures, notamment des carburants, par exemple les essences, kérosènes et gazoles.

13. Utilisation selon l'une quelconque des revendications 9 à 12, **caractérisée en ce que** la réaction est une réaction catalytique d'oxydation de benzothiophènes et/ou dibenzothiophènes, substitués ou non.

**14.** Procédé de désulfuration par oxydation de composés ou de compositions contenant des composés soufrés, **caractérisé en ce qu'**il comprend les étapes de :

    a) mise en contact du composé ou de la composition à désulfurer avec un agent oxydant et un solide selon l'une quelconque des revendications 1 à 6;
    b) réalisation de la réaction d'oxydation, dans un solvant approprié, de préférence à pression atmosphérique, et à une température appropriée, de préférence entre 20°C et la température d'ébullition du solvant ;
    c) élimination des produits d'oxydation du composé ou de la composition de départ.

**15.** Procédé selon la revendication 14, **caractérisé en ce que** les composés ou les compositions à désulfurer sont des produits raffinés ou non, issus de la distillation du pétrole, en particulier des hydrocarbures, et notamment les carburants, en particulier les essences, kérosènes et gazoles, plus spécifiquement les gazoles.

**16.** Procédé selon l'une quelconque des revendications 14 à 15, **caractérisé** eh ce que les composés sont des dérivés thiophéniques, en particulier les benzothiophènes, les dibenzothiophènes et leurs dérivés, notamment substitués.

**17.** Procédé selon l'une quelconque des revendications 14 à 16, **caractérisé en ce que** l'agent oxydant est choisi parmi les peroxydes, notamment le peroxyde d'hydrogène ou l'hydroperoxyde de tert-butyle, ces agents oxydants pouvant être utilisés seuls ou en mélange.

**18.** Procédé selon l'une quelconque des revendications 14 à 17, **caractérisé en ce que** le solvant de la réaction est choisi parmi le composé ou la composition à traiter, l'eau, les alcanes, les alcanols, les solvants polaires, ces solvants pouvant être utilisés seuls ou en mélange.

**19.** Procédé selon l'une quelconque des revendications 14 à 18, **caractérisé en ce qu'**il est réalisé en milieu homogène, hétérogène, monophasique, biphasique, voire triphasique.

**20.** Procédé selon l'une quelconque des revendications 14 à 19, **caractérisé en ce que** le rapport oxydant/composés à oxyder est compris entre 100/1 et 1/100, de préférence entre 100/1 et 1/1, de préférence encore entre 20/1 et 1/1, et tout particulièrement compris entre 10/1 et 2/1.

**21.** Procédé selon l'une quelconque des revendications 14 à 20, **caractérisé en ce que** le produit d'oxydation est éliminé du milieu réactionnel au fur et à mesure de sa formation.

**22.** Procédé selon l'une quelconque des revendications 14 à 21, dans lequel le produit d'oxydation est un carburant désulfuré.

**23.** Procédé selon l'une quelconque des revendications 14 à 22, dans lequel le produit d'oxydation est un gazole.

**Claims**

**1.** A solid containing a single layer of tungsten oxide on a support of zirconia and/or titanium dioxide, **characterised in that** the quantity of tungsten in tetrahedral form placed on the support is between 10% and 25% and preferably between 15% and 25% by weight in relation to the total mass of the support and **in that** it is obtained by anion exchange between the zirconia and peroxotungstic acid in an acid medium with a pH lower than 3.

**2.** A solid according to Claim 1, **characterised in that** the support is a zirconia support

**3.** A solid according to any of the preceding claims, **characterised in that** it also contains one or more metals chosen from platinum, rhodium, cobalt, palladium, nickel and iron.

**4.** A solid according to any of the preceding claims, **characterised in that** the tetrahedral co-ordination of the tungsten is maintained after calcination at a temperature in the region of 600°C and possibly over 700°C.

**5.** A solid according to any of the preceding claims, **characterised in that**:

a) the specific surface area of the solid, after heating at a temperature below 800°C, preferably below 700°C and in particular below or close to 600°C, is between 50 and 300 $m^2/g$, more specifically between 65 and 200 $m^2/g$, and advantageously between 86 and 150 $m^2/g$.

6. A solid according to any of the preceding claims, **characterised in that**:

a) the specific surface area of the solid, following heating at a temperature below 800°C and preferably below 700°C, and in particular below or close to 600°C, is between 50 and 300 $m^2/g$, more specifically between 65 and 200 $m^2/g$, and advantageously between 86 and 150 $m^2/g$;
b) the solid presents a total acidity measured through ammonia adsorption levels between 0.1 and 0.5 mmol/g, preferably between 0.2 and 0.04 mmol/g, and advantageously in the region of 0.35 mmol/g of solid, following heating at a temperature below 800°C and preferably below 700°C, and in particular below or close to 600°C.

7. Process for preparing a solid according to one of claims 1-6, **characterised in that** a single layer of $WO_4^{-2}$ ions is placed on a zirconia and/or titanium dioxide support and **in that** it comprises the following stages:

a) oxidation of tungstic acid into peroxotungstic acid ($H_2W_2O_{11}$);
b) anion exchange in an acid medium, preferably with a pH below 3, between the solution of peroxotungstic acid thus obtained and a hydrated zirconia ($ZrO_2$) and/or hydrated titanium dioxide ($TiO_2$ support; and
c) recovery of the tungsten/zirconia and/or titanium dioxide solid.

8. Process for preparing a solid according to one of Claims 1-6, **characterised in that** a single layer of $WO_4^{-2}$ ions is placed on a zirconia and/or titanium dioxide support and **in that** it comprises the following stages:

a) oxidation of hydrated tungsten trioxide ($WO_3$) with an oxidising agent present;
b) anion exchange in an acid medium, preferably with a pH below 3, between the solution of peroxotungstic acid thus obtained and a hydrated zirconia ($ZrO_2$) and/or hydrated titanium dioxide ($TiO_2$) support; and
c) recovery of the tungsten/zirconia and/or titanium dioxide solid.

9. Use of a solid according to any of Claims 1-6 as a catalyst in oxidation, epoxidation, hydrodesulphurisation and isomerisation reactions involving paraffins and olefins, hydrogenation of aromatic compounds and oxidation of sulphur or olefin compounds.

10. Use according to Claim 9, **characterised in that** the reaction catalysed is an acid catalysis reaction.

11. Use according to either of Claims 9 or 10, **characterised in that** the reaction is a catalytic reaction of oxidation of sulphur derivatives, in particular those present in hydrocarbons, both before and after refining.

12. Use according to any of Claims 9-11 for the desulphurisation of hydrocarbons, in particular fuels such as petrol, kerosene and diesel.

13. Use according to any of Claims 9-12, **characterised in that** the reaction is a catalytic reaction of oxidation of benzothiophenes and/or dibenzothiophenes, whether or not substituted.

14. Process involving desulphurisation through oxidation of compounds or mixtures containing sulphur compounds, **characterised in that** it comprises the following stages:

a) bringing the compound or mixture to be desulphurised into contact with an oxidising agent and a solid, according to any of Claims 1-6;
b) carrying out the oxidation reaction within a suitable solvent, preferably at atmospheric pressure and at a suitable temperature, and preferably between 20°C and the boiling point of the solvent;
c) elimination of the products of oxidation of the initial compound or mixture.

15. Process according to Claim 14, **characterised in that** the compounds or mixtures to be desulphurised are refined or unrefined products obtained from the distillation of oil, especially hydrocarbons and in particular fuels, most notably petrol, kerosene and diesel and more specifically diesel.

16. Process according to either of Claims 14 and 15, **characterised in that** the compounds are thiophene derivatives, especially benzothiophenes, dibenzothiophenes and their derivatives, and in particular substitutes.

17. Process according to any of Claims 14-16, **characterised in that** the oxidising agent is chosen from among peroxides, especially hydrogen peroxide or tert-butyl hydroperoxide, these oxidising agents being useable either alone or in a mixture.

18. Process according to any of Claims 14-17, **characterised in that** the reaction solvent is chosen from among the compound or mixture to be treated, water, alkanes, alcanols and polar solvents, these solvents being useable either alone or in a mixture.

19. Process according to any of Claims 14-18, **characterised in that** it is carried out in a homogeneous, heterogeneous, munophase, biphase or even triphase medium.

20. Process according to any of Claims 14-19, **characterised in that** the ratio of oxidising agent to compounds to be oxidised is between 100:1 and 1:100, preferably between 100:1 and 1:1, more preferably between 20:1 and 1:1 and advantageously between 10:1 and 2:1.

21. Process according to any of Claims 14-20, **characterised in that** the product of oxidation is eliminated from the reaction medium as and when it forms.

22. Process according to any of Claims 14-21, in which the product of oxidation is a desulphurised fuel.

23. Process according to any of Claims 14-22, in which the product of oxidation is a diesel oil.


**Patentansprüche**

1. Feststoff, enthaltend eine Monoschicht aus Wolframoxid auf einem Zirkon- und/oder Titandioxidträger, **dadurch gekennzeichnet, dass** die Menge an Wolfram, in tetraedrischer Form, die auf dem Träger aufgebracht ist, zwischen 10 Gew.% und 25 Gew.%, vorzugsweise zwischen 15 Gew.% und 25 Gew.%, bezogen auf die Gesamtmasse des Trägers, beträgt, und **dadurch** dass er durch den Austausch von Anionen zwischen Zirkon und Peroxowolframsäure in einem sauren Milieu bei einem pH-Wert unterhalb von 3 erhalten wird.

2. Feststoff nach Anspruch 1, **dadurch gekennzeichnet, dass** der Träger ein Zirkonträger ist.

3. Feststoff nach einem der vorangegangenen Ansprüche, **dadurch gekennzeichnet, dass** er zusätzlich ein oder mehrere Metalle enthält, ausgewählt aus Platin, Rhodium, Kobalt, Palladium, Nickel und Eisen.

4. Feststoff nach einem der vorangegangenen Ansprüche, **dadurch gekennzeichnet, dass** die tetraedrische Anordnung des W nach Calcinierung bei einer Temperatur von etwa 600°C, oder sogar oberhalb von 700°C erhalten wird.

5. Feststoff nach einem der vorangegangenen Ansprüche,
   **dadurch gekennzeichnet, dass**

   a) die spezifische Oberfläche des Feststoffs nach Erhitzen auf eine Temperatur unterhalb von 800°C, vorzugsweise unterhalb von 700°C, insbesondere unterhalb oder bei etwa 600°C, zwischen 50 und 300 $m^2/g$ beträgt, noch bevorzugter zwischen 65 und 200 $m^2/g$, vorzugsweise zwischen 86 und 150 $m^2/g$.

6. Feststoff nach einem der vorangegangenen Ansprüche,
   **dadurch gekennzeichnet, dass**

   a) die spezifische Oberfläche des Feststoffs nach Erhitzen auf eine Temperatur unterhalb von 800°C, vorzugsweise unterhalb von 700°C, insbesondere unterhalb oder im Bereich von etwa 600°C zwischen 50 und 300 $m^2/g$ beträgt, noch bevorzugter zwischen 65 und 200 $m^2/g$, vorzugweise zwischen 86 und 150 $m^2/g$;
   b) der vorliegende Feststoff einen Gesamtsäuregehalt, gemessen durch Adsorption von Ammoniak zwischen 0,1 und 0,5 mmol/g, vorzugsweise zwischen 0,2 und 0,4 mmol/g, noch bevorzugter von etwa 0,35 mmol/g, Feststoff nach Erhitzen auf eine Temperatur unterhalb von 800°C, vorzugsweise unterhalb von 700°C, insbesondere unterhalb von oder im Bereich von etwa 600°C, aufweist.

**7.** Verfahren zum Herstellen eines Feststoff nach einem der Ansprüche 1 bis 6, **dadurch gekennzeichnet, dass** eine Monoschicht an $WO_4^{2-}$ Ionen auf einen Zirkon- und/oder Titandioxidträger aufgebracht wird, und dass das Verfahren folgende Schritte aufweist:

a) Oxidation von Wolframsäure in Peroxowolframsäure ($H_2W_2O_{11}$) ;
b) Ionenaustausch im sauren Milieu, vorzugsweise bei einem pH-Wert unterhalb von 3, zwischen der Peroxowolframsäurelösung, die auf diese Weise erhalten wurde, und einem Zirkon ($ZrO_2$) Hydrat- und/oder Titandioxidhydratträger; und
c) Wiedergewinnen des festen Wolfram/Zirkon- und/oder Titandioxids.

**8.** Verfahren zum Herstellen eines Feststoffs nach einem der Ansprüche 1 bis 6, **dadurch gekennzeichnet, dass** eine Monoschicht an $WO_4^{2-}$ Ionen auf einem Zirkon- und/oder Titandioxidträger aufgebracht wird, und dass es folgende Schritte aufweist:

a) Oxidation von Wolframtrioxid ($WO_3$) Hydrat in Gegenwart eines Oxidationsmittels;
b) Ionenaustausch im sauren Milieu, vorzugsweise unterhalb eines pH-Werts von 3, zwischen der Peroxowolframsäurelösung, die auf diese Weise erhalten wurde, und einem Zirkon ($ZrO_2$) Hydrat- und/oder Titandioxidhydratträger; und
c) Wiedergewinnen des festen Wolfram/Zirkon- und/oder Titandioxids.

**9.** Verwendung eines Feststoffs nach einem der Ansprüche 1 bis 6 als Reaktionskatalysator für die Oxidation, Epoxidation, Hydrodesulfurierung, Isomerisation von Paraffinen und von Olefinen, für die Hydrierung von aromatischen Verbindungen, Oxidation von Schwefelverbindungen und von Olefinen.

**10.** Verwendung nach Anspruch 9, **dadurch gekennzeichnet, dass** die Reaktion eine säurekatalysierte Reaktion ist.

**11.** Verwendung nach einem der Ansprüche 9 oder 10, **dadurch gekennzeichnet, dass** die Reaktion eine katalytische Oxidationsreaktion von Schwefelderivaten ist, insbesondere von solchen Derivaten, die in Kohlenwasserstoffen vorkommen, vor oder sogar nach der Raffinierung.

**12.** Verwendung nach einem der Ansprüche 9 bis 11 für die Desulfurierung von Kohlenwasserstoffen, insbesondere von Treibstoffen, beispielsweise Benzinen, Kerosinen und Gasölen.

**13.** Verwendung nach einem der Ansprüche 9 bis 12, **dadurch gekennzeichnet, dass** die Reaktion eine katalytische Oxidationsreaktion von Benzothiophenen und/oder Dibenzothiophenen ist, wobei diese substituiert sind oder unsubstituiert sein können.

**14.** Verfahren zur oxidativen Desulfurierung von Verbindungen oder Zusammensetzungen, die Schwefel haltige Verbindungen enthalten, **dadurch gekennzeichnet, dass** es die folgenden Schritte umfasst:

a) Inkontaktbringen von einer Verbindung oder Zusammensetzung, die desulfuriert werden soll, mit einem Oxidationsmittel und einem Feststoff nach einem der Ansprüche 1 bis 6;
b) Durchführen der Oxidationsreaktion in einem geeigneten Lösungsmittel, vorzugsweise bei Atmosphärendruck und bei einer geeigneten Temperatur, vorzugsweise zwischen 20°C und der Verdampfungstemperatur des Lösungsmittels;
c) Entfernen der Oxidationsprodukte der Ausgangsverbindung oder der Ausgangszusammensetzung.

**15.** Verfahren nach Anspruch 14, **dadurch gekennzeichnet, dass** die Verbindungen oder die Zusammensetzungen, die desulfuriert werden sollen, raffinierte Produkte sind oder nichtraffinierte Produkte sind, die aus der Destillation von Erdöl stammen, insbesondere Kohlenwasserstoffe und vorzugsweise Brennstoffe, beispielsweise Benzine, Kerosine und Gasöle, besonders bevorzugt Gasöle.

**16.** Verfahren nach einem der Ansprüche 14 bis 15, **dadurch gekennzeichnet, dass** die Verbindungen Thiophenderivate, insbesondere Benzothiophene, Dibenzothiophene und deren Derivate sind, insbesondere substituierte.

**17.** Verfahren nach einem der Ansprüche 14 bis 16, **dadurch gekennzeichnet, dass** das Oxidationsmittel ausgewählt ist aus Peroxiden, insbesondere Wasserstoffperoxid oder Tertbutylhydroperoxid, wobei diese Oxidationsmittel einzeln oder im Gemisch verwendet werden können.

**18.** Verfahren nach einem der Ansprüche 14 bis 17, **dadurch gekennzeichnet, dass** das Lösungsmittel für die Reaktion ausgewählt wird aus der Verbindung oder der Zusammensetzung, die behandelt werden soll, Wasser, Alkanen, Alkanolen, polaren Lösungsmitteln, wobei diese Lösungsmittel einzeln oder im Gemisch verwendet werden können.

**19.** Verfahren nach einem der Ansprüche 14 bis 18, **dadurch gekennzeichnet, dass** es im homogenen, heterogenen, Mono-, Bi- oder sogar Triphasenmilieu durchgeführt wird.

**20.** Verfahren nach einem der Ansprüche 14 bis 19, **dadurch gekennzeichnet, dass** das Verhältnis Oxidationsmittel zu oxidierender Verbindung sich im Bereich von 100/1 und 1/100, vorzugsweise zwischen 100/1 und 1/1, noch bevorzugter zwischen 20/1 und 1/1, und insbesondere zwischen 10/1 und 2/1 beträgt.

**21.** Verfahren nach einem der Ansprüche 14 bis 20, **dadurch gekennzeichnet, dass** das Oxidationsprodukt aus dem Reaktionsmilieu im gleichen Maße wie es gebildet wird, auch entfernt wird.

**22.** Verfahren nach einem der Ansprüche 14 bis 21, in welchem das Oxidationsprodukt ein desulfurierter Kraftstoff ist.

**23.** Verfahren nach einem der Ansprüche 14 bis 22, in dem das Oxidationsprodukt ein Gasöl ist.

-- Figure 1 --

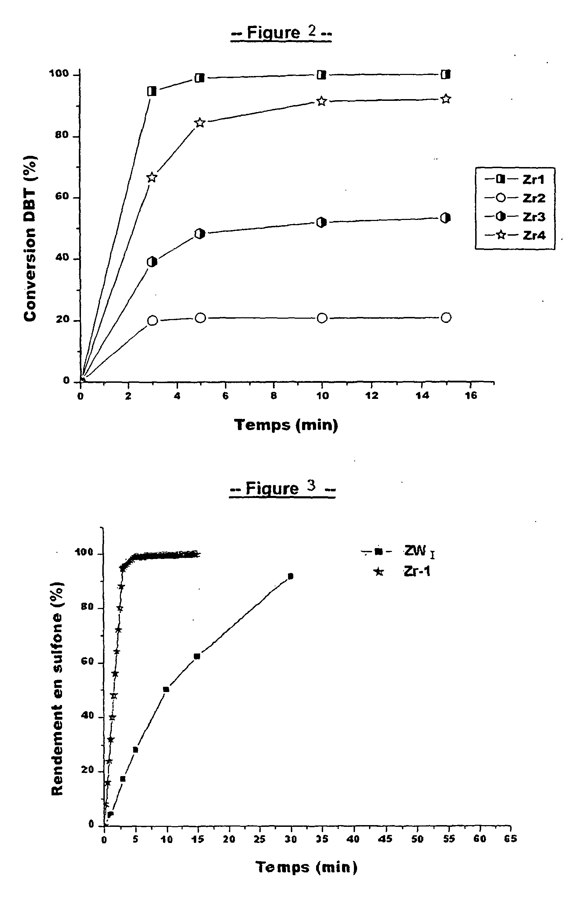

## -- Figure 2 --

Conversion DBT (%) vs Temps (min)

Legend:
—□— Zr1
—O— Zr2
—◐— Zr3
—☆— Zr4

## -- Figure 3 --

Rendement en sulfone (%) vs Temps (min)

Legend:
—■— ZW$_I$
★ Zr-1

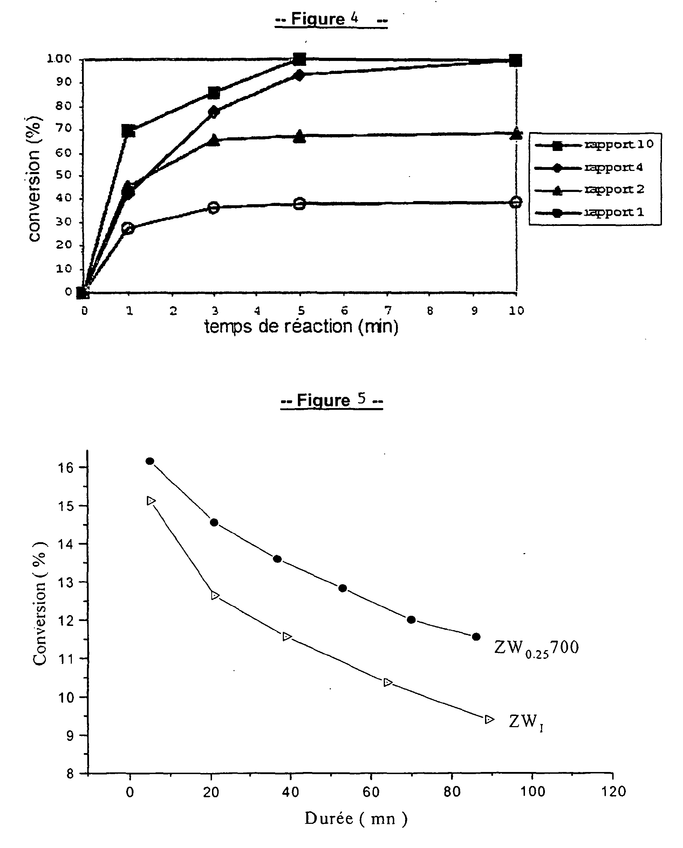

-- Figure 4 --

-- Figure 5 --

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2739132 A
- US 3474042 A
- US 5902767 A, Kresge
- US 5113034 A, Soled
- US 5648589 A, Soled
- US 5510309 A, Chang
- US 6124232 A
- US 5453556 A
- WO 0148119 A

**Littérature non-brevet citée dans la description**

- **HINO ; ARATA.** *J. Chem. Soc., Chem. Commun.,* 1979, 1148
- **E. LGLESIA et al.** *J. Phys. Chem. B,* 1999, vol. 103, 630-640
- **M. SCHEITHAUER.** *J. Catal.,* 1998, vol. 180, 1-13
- **J. M. PARERA.** Applied Catalysis A : General. Elsevier Science, 05 Décembre 1997, vol. 163, 165-175
- **SOHN ; PARK.** *Langmuir,* 1998, vol. 14, 6140
- **HINO et al.** *J. Chem. Soc., Chem. Commun.,* 1979, 1148
- **HSU.** *Chem. Commun.,* 1992, 1645
- **DE VOS et al.** *Catal. Today,* 2000, vol. 60, 209-218
- **E. IGLESIA et al.** *J. Catal.,* 2000, vol. 194, 175-187